# EUROPÄISCHE PATENTSCHRIFT

(11) **EP 1 680 979 B1**
(45) Veröffentlichungstag und Bekanntmachung des Hinweises auf die Patenterteilung: **15.04.2009**
(21) Anmeldenummer: 05450205.9
(22) Anmeldetag: 29.12.2005
(51) Int. Cl.: A47C 4/54

(54) **Aufblasbares Möbel**
Inflatable piece of furniture
Meuble gonflable

(30) Priorität: 13.01.2005 AT 452005
(43) Veröffentlichungstag der Anmeldung: 19.07.2006
(73) Patentinhaber: Braunböck, Andreas, 1140 Wien (AT); Munninger, Alexander, 4810 Gmunden (AT)
(72) Erfinder: Braunböck, Andreas, 1140 Wien (AT); Munninger, Alexander, 4810 Gmunden (AT)
(74) Vertreter: Babeluk, Michael

(56) Entgegenhaltungen:
- GB-A- 454 378
- GB-A- 860 296
- GB-A- 913 530
- US-A- 4 179 832
- US-A- 5 778 581
- US-A- 6 089 668

## Beschreibung

Die Erfindung betrifft ein aufblasbares Möbel, vorzugsweise Tisch, Stehpult, Ablage, Hocker, Bank, Liege, Bett, Werbedisplay oder dgl. gemäß dem Oberbegriff von Patentanspruch 1, vgl. GB-A-860 296.

Aufblasbare Möbel zeichnen sich dadurch aus, bei Bedarf rasch verfügbar zu sein, wobei nach dem Ablassen der Luft bei der Lagerung ein im Vergleich zu herkömmlichen Möbeln nur sehr geringer Platzbedarf anfällt.

Aus der DE 89 13 178 U1 ist beispielsweise ein aufblasbarer Picknicktisch bekannt, welcher nach dem Aufblasen einen zylindrischen Körper aufweist. Der Picknicktisch umfasst einen ebenen oberen Wandabschnitt mit einer Vielzahl becherartiger Öffnungen in unterschiedlicher Größe, einer Mittelöffnung für einen Strandschirm sowie einen zylindrischen Mantelbereich mit einer Vielzahl von Einkerbungen um den Mantelbereich in aufgeblasenem Zustand zu stabilisieren. Der gezeigte Picknicktisch ist allerdings anfällig für Beschädigungen und Verletzungen der aufblasbaren Hülle, sei es bei der Verwendung eines Essbestecks oder durch die Glut von Zigaretten etc.

Weiters ist aus der US 5,134,930 A ein aufblasbares Servicetablett bekannt, welches zur Gänze aus PVC oder einem weichen Plastikmaterial besteht, wobei lediglich ein kleiner, trapezförmiger Bereich ein den Boden versteifendes Element aufweist und von einem aufblasbaren Randwall umgeben ist. In diesem Randwall sind zwei Becherhalter eingearbeitet.

In diesem Zusammenhang ist aus der DE 91 11 104 U1 ein aufblasbarer Spieltisch bekannt, welcher aus vier in sich abgeschlossenen Luftkammern besteht, wobei jede Luftkammer für sich aufgeblasen und mit einem Stiftverschluss verschlossen wird. Die vier Luftkammern sind an den kurzen Seiten miteinander verbunden und bilden einen viereckigen Innenraum.

Die vier aneinandergefügten Luftkammern sind mit nach innen weisenden Anschlussfalzen zur Aufnahme einer Spielfläche und einer Bodenfläche ausgestattet, wobei die Verbindung der Spielfläche bzw. der Bodenfläche mit dem Anschlussfalz durch Schweißen oder Kleben hergestellt werden kann. Ein derartige hergestellter Spieltisch weist wulstförmige Außenränder auf, die die versenkte Spielfläche umrahmen und so ein Herunterfallen der Spielfiguren verhindern. Der Spieltisch wäre allerdings nur eingeschränkt als Esstisch, Stehpult etc., beispielsweise bei Ausstellungen, Messen oder Gartenfesten, verwendbar, da er zu fragil ausgeführt ist und die Gefahr einer Beschädigung durch ein Besteck oder durch Zigarettenglut zu groß ist.

Schließlich ist aus der US 6,823,801 B2 ein aufblasbarer Imbisstisch in Form eines Fußballs, Basketballs etc. bekannt, welcher einen Fußteil und am gegenüberliegenden Ende eine Aufnahme für einen herausnehmbaren Becher aufweist. Der Becher dient zur Aufnahme von Snacks und kann zur Reinigung auf einfache Weise aus seiner Aufnahme entfernt werden. Die Außenhülle des aufblasbarer Imbisstisches besteht beispielsweise aus einer Hülle, welche im Wesentlichen der äußeren Gestalt eines Fußballs entspricht, wobei im Inneren des Fußballs ein zylindrischer Hohlkörper vorgesehen ist, welcher an seinem oberen Ende in eine Aufnahme für den Becher übergeht. Die Außenhülle weist ein Einlassventil zum Aufpumpen des Imbisstisches auf, wobei der Innenraum des fußballförmigen Gebildes über Öffnungen mit dem Innenraum des zylindrischen Hohlkörpers und dem ebenfalls aufblasbaren Fußteil in Verbindung steht. Aufgrund der äußeren Form ist der Imbisstisch nur eingeschränkt verwendbar.

Aus der AT 409.209 B der Patentanmelder ist ein Möbelstück bekannt, das einen aufblasbaren Körper aufweist. Der aufblasbare Körper bildet dabei eine Halterung für eine Säule, an deren Oberseite eine Tischplatte befestigt ist. Eine weitere Lösung dieser Art sind in der US 5,778,581 A und in der oben erwähnten GB 860 296 A beschrieben. Diesen Lösungen ist gemeinsam, dass der mögliche Innendruck dadurch begrenzt ist, dass sich die Hülle, die den Hohlkörper begrenzt, übermäßig nach außen wölbt und sowohl das ästhetische Erscheinungsbild als auch die Funktion beeinträchtigt. Aufgrund der relativ geringen Stabilität sind Möbel dieser Art nur beschränkt einsetzbar.

Ein Möbelstück mit mehrschichtigem Aufbau ist aus der GB 454 378 A bekannt. Es handelt sich dabei um einen Polstersessel, bei dem die Anforderungen primär auf den Komfort und erst in zweiter Linie auf Stabilität gerichtet sind.

Aufgabe der Erfindung ist es, ausgehend vom dargelegten Stand der Technik ein stabiles, aufblasbares Möbel vorzuschlagen, welches als Tisch, Stehpult, Ablage, Hocker, Bank, Liege, Bett, oder auch als Werbedisplay oder dgl. verwendet werden kann, wobei das Möbel nach Gebrauch mit großer Volumeneinsparung zu lagern ist. Weiters soll im Einsatz der Möbel bei Gartenfesten, Empfängen, Messen etc. das Risiko einer Beschädigung durch spitze Gegenstände (Steine, Besteck, Glassplitter, etc.) und offenes Feuer weitgehend ausgeschaltet werden.

Diese Aufgabe wird erfindungsgemäß durch die Merkmale von Patentanspruch 1 gelöst. Erfindungsgemäß ist der aufblasbare Hohlkörper durch die beiden stabilen Platten (Basisplatte und Deckblatte) weitgehend geschützt. Das Möbel kann nach Gebrauch, nach dem Ablassen des Füllgases, z.B. Luft, auf ein kompaktes Paket, dessen Volumen durch die beiden stabilen Platten und die komprimierte, leere Hülle des Hohlkörpers definiert wird, reduziert werden.

Wesentlich an der vorliegenden Erfindung ist, dass der mögliche Innendruck des Hohlkörpers nur von der Materialfestigkeit der äußeren Schicht abhängt und daher wesentlich größer sein kann als bei herkömmlichen Möbeln. Die Innenschicht wird mechanisch fast gar nicht belastet, da die Kräfte von der äußeren Schicht abgefangen werden. Auf diese Weise ist es möglich, wesentlich stabilere aufblasbare Möbel herzustellen.

Gemäß der vorliegenden Erfindung ist an zumindest einer Seitenfläche des Möbels, beispielsweise an der gesamten Mantelfläche, eine Schutz- oder Dekorschicht aus einem widerstandfähigen Material angeordnet. Dabei soll zwischen der Schutz- oder Dekorschicht und dem mit Überdruck beaufschlagen Hohlkörper ein luftgefüllter Zwischenraum ausgebildet sein, so dass der innen angeordnete Hohlkörper durch die im Abstand dazu angebrachte Schutzschicht vor allfälligen Stichverletzungen oder auch Brandverletzungen durch Zigaretten oder Feuerzeuge geschützt ist. Die Dekorschicht kann dabei aus einem reißfesten, schnittfesten, brandhemmenden, luftdurchlässigen Gewebe bestehen und beispielsweise Werbeaufdrucke wechselbar oder fix aufnehmen. Die Dekorschicht nimmt auch Zugspannungen auf, die vom Hohlkörper durch das Auseinanderdrücken der Basisplatte und der Deckplatte hervorgerufen werden und trägt damit wesentlich zur Stabilität des Möbels bei.

Besonders günstig ist es, wenn Schutz- oder Dekorschicht einen zur Mitte hin abnehmenden Querschnitt aufweist und vorzugsweise ein Rotationshyperboloid darstellt. Der Hohlkörper kann analog ausgebildet sein oder aber zur Vereinfachung der Herstellung zylindrische Form aufweisen. Durch die eingezogene Form wird überraschenderweise eine besonders hohe Stabilität erreicht.

Gemäß einer weiteren Ausführungsvariante der Erfindung kann im Hohlkörper eine Halterung angeordnet sein, in die ein Leuchtmittel zur Beleuchtung des Hohlkörpers einsetzbar ist. Dabei besteht der Hohlkörper aus lichtdurchlässigen Materialien und beleuchtet die Schutz- oder Dekorschicht von Innen, so dass eine Werbebotschaft besser zur Geltung gebracht wird.

Die Erfindung wird im folgenden anhand von zum Teil schematischen Zeichnungen näher erlaütert. Es zeigen:
- Fig. 1: ein erfindungsgemäßes Möbel in einer Schnittdarstellung wobei die erfindungsgemäße Schutz- oder Dekorschicht nicht gezeigt ist;
- Fig. 2: eine Ausführungsvariante des erfindungsgemäßen Möbels in einer Schnittdarstellung gemäß Fig. 1;
- Fig. 3: eine dreidimensionale Ansicht des Möbels gemäß Fig. 2;
- Fig. 4: ein Detail III aus der Darstellung gemäß Fig. 2; sowie
- Fig. 5: eine weitere Ausführungsvariante eines aufblasbaren Möbels in einer Draufsicht.

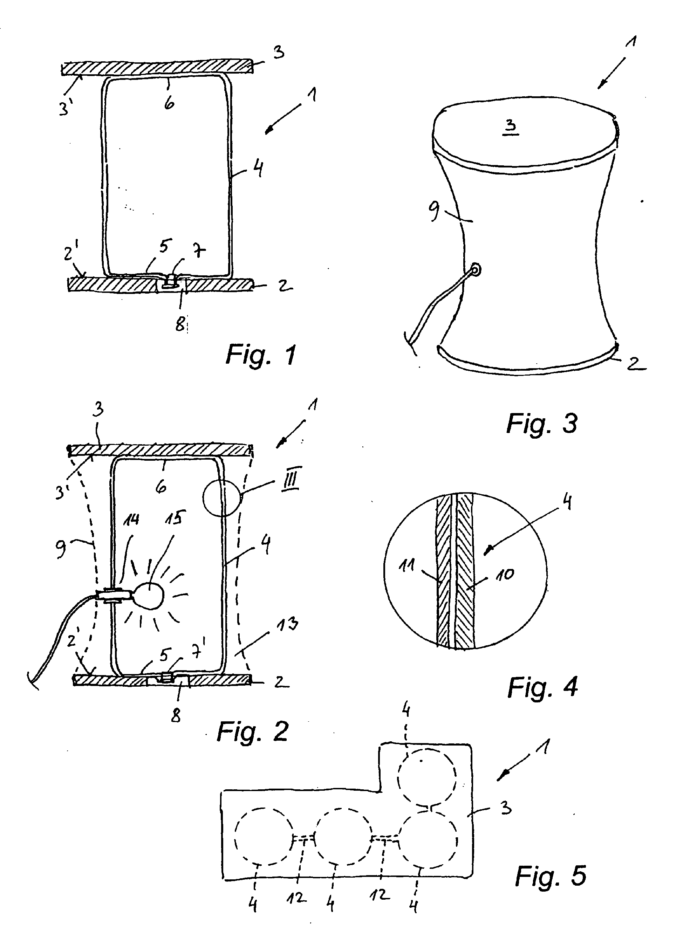

Das in Fig. 1 dargestellte Möbel 1, beispielsweise ein Tisch, weist eine stabile Basisplatte 2 sowie eine stabile Deckplatte 3 auf, wobei zwischen den einander zugekehrten Oberflächen 2' und 3' der Basisplatte 2 sowie der Deckplatte 3 ein aufblasbarer Hohlkörper 4 angeordnet ist, welcher mit Überdruck beaufschlagbar ist. Die erfindungsgemäße Schutz- oder Dekorschicht ist nicht gezeigt.

Der Hohlkörper 4 weist einen im Wesentlichen kreisförmigen Querschnitt auf, wobei die im dargestellten Beispiel runden oder mehreckigen Basis- bzw. Deckplatten 2, 3 den Hohlkörper 4 seitlich überragen und so eine gewisse Schutzfunktion ausüben. Der Hohlkörper 4 ist zylinderförmig ausgebildet und mit seinen Deckflächen 5 und 6 an der Basisplatte 2 bzw. der Deckplatte 3 befestigt, beispielsweise an deren Oberflächen 2', 3' angeklebt. Weiters ist im Hohlkörper 4 ein als Rückschlagventil 6 ausgebildetes Einlassventil vorgesehen, welches bevorzugt im Bereich einer Öffnung 8 der Basisplatte 2 angeordnet ist.

Wie in Fig. 2 und Fig. 3 dargestellt, ist an zumindest einer Seitenfläche des Möbels, im dargestellten Beispiel an der gesamten Mantelfläche, eine Schutz- oder Dekorschicht 9 aus einem widerstandsfähigen Material angeordnet. Zwischen der Schutz- oder Dekorschicht 9 und dem mit Überdruck beaufschlagbaren Hohlkörper 4 ist ein luftgefüllter Zwischenraum 13 ausgebildet. Die Dekorschicht 9 besteht beispielsweise aus einem reißfesten, brandhemmenden, luftdurchlässigen Gewebe und kann Werbeaufdrucke aufnehmen. Eine wesentliche Funktion der Dekorschicht 9 ist es auch, eine auf Zug beanspruchte Verankerung der beiden Platten 2, 3 zu bilden. Der Hohlkörper 4 drückt die Platten 2, 3 auseinander, so dass eine in sich verspannte Konstruktion entsteht, die sehr stabil ist und auch eine beispielsweise auf einer Tischkante sitzende Person problemlos tragen kann.

Wie im Detail gemäß Fig. 4 dargestellt besteht der Hohlkörper 4 bevorzugt aus einer äußeren Schicht 10 aus einem nicht dehnbaren Material, beispielsweise aus einem Nylongewebe, und einer Innenschicht 11 aus einem dehnbaren, luftdichten Material, z.B. aus einer PU-Folie oder aus Latex. Wesentlich dabei ist, dass sich der Hohlkörper 4 nicht undefiniert verformen kann, sondern ab einem bestimmten Mindestdruck im Wesentlichen durch die Form der Hülle bestimmt ist, die die äußere Schicht 10 bildet. Dadurch kann auch die Zugbelastung der Innenschicht 11 begrenzt werden, so dass diese sehr leicht und dünn ausgebildet werden kann.

Die Dekorschicht 9 weist einen zur Mitte hin abnehmenden Querschnitt auf und nimmt dabei im Wesentlichen die Form eines Rotationshyperboloids ein. Dadurch wird nicht nur eine ästhetisch ansprechende Form verwirklicht, es wird auch erreicht, dass die Dekorschicht auch bei Auftreten geringfügiger Produktionstoleranzen überall einigermaßen gleichmäßig gespannt ist, so dass ein kompakter und solider Aufbau erreicht wird, die bei Berührung einen entsprechenden Widerstand entgegensetzt und daher gut manipuliert werden kann und auch einen robusten Eindruck vermittelt.

Zur indirekten Beleuchtung eines Festgeländes oder zu Werbezwecken kann im Hohlkörper 4 eine Halterung 14 angeordnet sein, in welche ein Leuchtmittel 15 zur inneren Beleuchtung des Hohlkörpers 4 einsetzbar ist, Bei einer derartigen Ausführungsvariante besteht der Hohlkörper 4 und die Schutz- oder Dekorschicht 9 aus einem lichtdurchlässigen Material.

Bei der in Fig. 5 dargestellten Variante handelt es sich um einen Ecktisch, beispielsweise um eine Bar, welche in Draufsicht dargestellt ist. Es sind hier mehrere, voneinander beabstandete mit Überdruck beaufschlagbare Hohlkörper 4 voresehen, die bevorzugt über Druckleitungen 12 miteinander in Verbindung stehen.

## Patentansprüche

1. Aufblasbares Möbel (1), vorzugsweise Tisch, Stehpult, Ablage, Hocker, Bank, Liege, Bett, oder Werbedisplay oder dgl., mit einer stabilen Basisplatte (2) und einer stabilen Deckplatte (3) zwischen denen zumindest ein mit Überdruck beaufschlagbarer Hohlkörper (4) angeordnet ist, welcher die Deckplatte (3) an der Basisplatte (2) abstützt, **dadurch gekennzeichnet, dass** der Hohlkörper (4) aus einer äußeren Schicht (10) aus einem nicht dehnbaren Material und einer Innenschicht (11) oder Innenbeschichtung aus einem dehnbaren, luftdichten Material besteht und dass an zumindest einer Seitenfläche des Möbels, vorzugsweise an der gesamten Mantelfläche, eine Schutz- oder Dekorschicht (9) aus einem widerstandsfähigen Material angeordnet ist und dass zwischen der Schutz- oder Dekorschicht (9) und dem mit Überdruck beaufschlagbaren Hohlkörper (4) ein luftgefüllter Zwischenraum (13) ausgebildet ist, wobei die Schutz- oder Dekorschicht (9) eine auf Zug beanspruchte Verankerung der beiden Platten (2,3) bildet.

2. Möbel (1) nach Anspruch 1, **dadurch gekennzeichnet, dass** der Hohlkörper (4) und/oder die Schutz- oder Dekorschicht (9) einen zur Mitte hin abnehmenden Querschnitt aufweist und vorzugsweise im Wesentlichen ein Rotationshyperboloid darstellt.

3. Möbel (1) nach Anspruch 1 oder 2, **dadurch gekennzeichnet, dass** der Hohlkörper (4) einen im Wesentlichen kreisförmigen Querschnitt aufweist.

4. Möbel (1) nach Anspruch 1, **dadurch gekennzeichnet, dass** der Hohlkörper (4) im Wesentlichen zylinderförmig ausgebildet ist und mit seinen Deckflächen (5, 6) an der Basisplatte (2) und an der Deckplatte (3) befestigt ist.

5. Möbel (1) nach Anspruch 4, **dadurch gekennzeichnet, dass** die Schutz-oder Dekorschicht (9) einen zur Mitte hin abnehmenden Querschnitt aufweist und vorzugsweise im Wesentlichen ein Rotationshyperboloid darstellt.

6. Möbel (1) nach einem der Ansprüche 1 bis 5, **dadurch gekennzeichnet, dass** mehrere, voneinander beabstandete mit Überdruck beaufschlagbare Hohlkörper (4) vorgesehen sind, die bevorzugt über Druckleitungen (12) miteinander in Verbindung stehen.

7. Möbel (1) nach einem der Ansprüche 1 bis 6, **dadurch gekennzeichnet, dass** in zumindest einem der Hohlkörper (4) ein als Rückschlagventil (7) ausgebildetes Einlassventil vorgesehen ist, welches bevorzugt im Bereich einer Öffnung (8) der Basisplatte (2) angeordnet ist.

8. Möbel (1) nach einem der Ansprüche 1 bis 7, **dadurch gekennzeichnet, dass** der Hohlkörper (4) und die Schutz- oder Dekorschicht (9) aus einem lichtdurchlässigen Material besteht und im Hohlkörper (4) eine Halterung (14) angeordnet ist, in welche ein Leuchtmittel (15) zur inneren Beleuchtung des Hohlkörpers (4) einsetzbar ist.

## Claims

1. Inflatable piece of furniture (1), preferably a table, high desk, shelf, stool, bench, deck chair, bed or display piece, etc., comprising a stable base plate (2) and a stable top plate (3) and at least one hollow body (4) in between for supporting top plate (3) against base plate (2), which hollow body (4) can be pressurised, **characterised in that** the hollow body (4) consists of an outer layer (10) made of non-stretchable material and an inner layer (11) or inner coating made of elastic, air-tight material, and that at least at one lateral face of the furniture piece, preferably along the entire lateral wall, a protective or decorative layer (9) of robust material is provided, and that an air-filled intermediary space (13) is provided between the protective or decorative layer (9) and the pressurised hollow body (4), with the protective or decorative layer (9) forming a tension-loaded bracket between the two plates (2, 3).

2. Furniture piece (1) according to claim 1, **characterised in that** the hollow body (4) and/or the protective or decorative layer (9) has an axial cross-section whose width decreases towards the middle, essentially forming a hyperboloid of revolution.

3. Furniture piece (1) according to claim 1, **characterised in that** the hollow body (4) has an essentially circular radial cross-section.

4. Furniture piece (1) according to claim 1, **characterised in that** the hollow body (4) is essentially cylindrical, and is fastened to the base plate (2) and the top plate (3) at its end faces (5, 6).

5. Furniture piece (1) according to claim 4, **characterised in that** the protective or decorative layer (9) has an axial cross-section whose width decreases towards the middle, essentially forming a hyperboloid of revolution.

6. Furniture piece (1) according to any of claims 1 to 5, **characterised in that** a plurality of pressurised hollow bodies (4) are provided, which are positioned at a certain distance from each other and are preferably interconnected via pressure lines (12).

7. Furniture piece (1) according to any of claims 1 to 6, **characterised in that** an inlet valve in the form of a back valve (7) is provided in at least one hollow body (4), which valve (7) preferably is located in the area of an opening (8) of the base plate (2).

8. Furniture piece (1) according to any of claims 1 to 7, **characterised in that** the hollow body (4) and the protective or decorative layer (9) is made of translucent material, and that a socket (14) is provided in the hollow body (4) into which a lighting means (15) may be inserted for interior lighting of the hollow body (4).

## Revendications

1. Meuble gonflable (1) de préférence table, pupitre, desserte, tabouret, banc, couchette, lit ou surface d'affichage publicitaire ou analogue, comportant une plaque de base (2) solide et une plaque de couverture (3), solide entre lesquelles se trouve au moins un corps creux (4) qui peut être mis en pression et soutient la plaque de couverture (3) sur la plaque de base (2),
**caractérisé en ce que**
le corps creux (4) se compose d'une couche extérieure (10) en un matériau non extensible et d'une couche intérieure (11) ou revêtement intérieur en un autre matériau extensible, étanche à l'air,
une couche de protection ou de décoration (9) en un matériau résistant, couvre au moins une surface latérale du meuble, de préférence toute la surface enveloppe, et
entre la couche de protection ou couche de décoration (9) et le corps creux (4) mis en pression, il est prévu un espace intermédiaire (13) rempli d'air,
la couche de protection ou de décoration (9) constitue un moyen d'ancrage en traction pour les deux plaques (2, 3).

2. Meuble (1) selon la revendication 1,
**caractérisé en ce que**
le corps creux (4) et/ou la couche de protection ou de décoration (9) présente une section diminuant vers le milieu et constitue pratiquement de préférence un hyperboloïde de rotation.

3. Meuble (1) selon la revendication 1 ou 2,
**caractérisé en ce que**
le corps creux (4) a une section pratiquement circulaire.

4. Meuble (1) selon la revendication 1,
**caractérisé en ce que**
le corps creux (4) a une section pratiquement cylindrique et il est fixé par ses surfaces de couverture (5, 6) à la plaque de base (2) et à la plaque de couverture (3).

5. Meuble (1) selon la revendication 4,
**caractérisé en ce que**
la couche de protection ou de décoration (9) présente une section diminuant vers le milieu et constitue pratiquement de préférence un hyperboloïde de rotation.

6. Meuble (1) selon les revendications 1 à 5,
**caractérisé par**
plusieurs corps creux (4) écartés les uns des autres et mis en pression, ces corps creux étant de préférence reliés les uns aux autres par des conduites de pression (12).

7. Meuble (1) selon les revendications 1 à 6,
**caractérisé en ce qu'**
au moins l'un des corps creux (4) comporte une soupape d'entrée réalisée sous forme de clapet antiretour (7) prévu de préférence au niveau de l'ouverture (8) de la plaque de base (2).

8. Meuble (1) selon les revendications 1 à 7,
**caractérisé en ce que**
le corps creux (4) et la couche de protection ou de décoration (9) sont en un matériau transparent et le corps creux (4) comporte un support (14) qui peut recevoir un moyen d'éclairage (15) intérieur du corps creux (4).
